# EUROPÄISCHE PATENTSCHRIFT

(11) **EP 2 327 910 B1**
(45) Veröffentlichungstag und Bekanntmachung des Hinweises auf die Patenterteilung: **05.12.2012**
(21) Anmeldenummer: 10012021.1
(22) Anmeldetag: 30.09.2010
(51) Int. Cl.: F16J 15/34

(54) **Gleitringdichtungsanordnung mit einem Einsatz zur Kühlflüssigkeitsführung**
Mechanical seal arrangement with an insert for coolant liquid transport
Agencement de joint d'étanchéité mécanique doté d'un insert pour guider le liquide de refroidissement

(30) Priorität: 25.11.2009 DE 102009055637
(43) Veröffentlichungstag der Anmeldung: 01.06.2011
(73) Patentinhaber: Carl Freudenberg KG, 69469 Weinheim (DE)
(72) Erfinder: Feigl, Peter, 82335 Höhenrain (DE); Lederer, Andreas, 80637 München (DE); Simon, Clemens, 82362 Weilheim (DE)

(56) Entgegenhaltungen:
- DE-U- 6 904 388
- FR-A- 1 372 211
- US-A- 3 659 860

## Beschreibung

### Technisches Gebiet

Die Erfindung betrifft eine Gleitringdichtungsanordnung gemäß dem Oberbegriff des Patentanspruchs 1.

### Stand der Technik

Die DE 69 04 388 U zeigt eine dichte Durchführung einer Drehachse durch eine Wand. Die FR 1 372 211 A zeigt eine Gleitringdichtungsanordnung, bei der zwei Dichtungen durch ein Fluid gekühlt werden. Die US 3 659 860 zeigt eine Gleitringdichtungsanordnung mit elastomeren Ringen.

Aus dem Stand der Technik sind Gleitringdichtungsanordnungen der eingangs genannten Art bereits bekannt Dabei sind die koaxial angeordneten Gleitringe üblicherweise gehäusefest an einem Gehäuse und ist der Gegenring wellenfest an einer rotierenden Welle angeordnet.

Bei rotierender Welle gleiten die Dichtungsflächen der Gleitringe und des Gegenrings aneinander. Hierbei kann es durch Überhitzungen an den Dichtungsflächen zu Problemen kommen.

### Darstellung der Erfindung

Der Erfindung liegt daher die Aufgabe zugrunde, eine betriebstaugliche Gleitringdichtungsanordnung anzugeben, welche nach problemloser Montage eine hohe Hitzeresistenz und eine hohe Lebensdauer zeigt.

Die vorliegende Erfindung löst die zuvor genannte Aufgabe durch die Merkmale des Patentanspruchs 1.

Erfindungsgemäß ist erkannt worden, dass durch einen Einsatz eine Leiteinrichtung geschaffen wird, die eine gezielte Führung einer Kühlflüssigkeit zu thermisch beanspruchten Bereichen der Gleitringdichtungsanordnung ermöglicht. Die Kühlflüssigkeit kann erfindungsgemäß gezielt die beanspruchten Gleitwerkstoffe kühlen, aus denen die Dichtungsflächen gefertigt sind. Durch Zuströmung der Kühlflüssigkeit an einer inneren Arbeitsfläche des Einsatzes und Abströmung der Kühlflüssigkeit an einer äußeren Arbeitsfläche des Einsatzes wird eine Zirkulierung der Kühlflüssigkeit realisiert. Diese Zirkulierung wird durch eine Pumpwirkung unterstützt, die durch Zentrifugalkräfte des rotierenden Gegenrings erzeugt wird. Weiter ist erkannt worden, dass durch einen Einsatz eine vormontierte Einheit realisierbar ist, welche werksgeprüft vor Ort bei einem Kunden in einfacher Weise montiert werden kann.

Der Einsatz weist komprimierbare Dämpferelemente auf, wobei ein erstes Dämpferelement in radialer Richtung nach außen abragt und ein zweites Dämpferelement in radialer Richtung nach innen abragt. Hierdurch ist eine Drehmomentübertragung durch schwingungsdämpfende Ausformungen, nämlich durch die Dämpferelemente, möglich. Die Dämpferelemente sind derart mit Hohlräumen ausgestattet, dass sie problemlos geringfügig deformierbar sind.
Folglich ist die eingangs genannte Aufgabe gelöst.

Der Einsatz könnte aus einem Kunststoff gefertigt sein. Hierdurch ist eine zuverlässige Schwingungsdämpfung realisierbar. Des Weiteren ist der Einsatz relativ leicht deformierbar und kann federnd in einen Gleitring eingepresst werden.

Der Einsatz könnte an seinem den Dichtungsflächen zugewandten Ende Rastnasen aufweisen, die von der inneren Arbeitsfläche radial abragen. Die Rastnasen erlauben ein federndes Einrasten des Einsatzes in einem gehäusefesten ersten Gleitring.

Der Einsatz könnte Rippen aufweisen, die von der äußeren Arbeitsfläche radial abragen. Die Rippen stellen die Schaffung eines Radialspalts für einen Kühlflüssigkeitsdurchfluss sicher. Der Radialspalt wird zwischen der äußeren Arbeitsfläche und dem zweiten Gleitring erzeugt. Die Rippen erstrecken sich vorzugsweise in axialer Richtung und erzeugen dabei einen umfänglich gleichen radialen Abstand der äußeren Arbeitsfläche von einer Wandung des zweiten Gleitrings.

Der Einsatz könnte einen von der äußeren Arbeitsfläche radial abragenden Flansch aufweisen, welcher an seinem den Dichtungsflächen abgewandten Ende ausgebildet ist. Der Flansch kann als Anschlag verwendet werden.

Der Flansch könnte Durchbrüche aufweisen, wobei die Durchbrüche mit den Rippen fluchten. Durch die Durchbrüche kann Kühlflüssigkeit hindurchtreten und zirkulieren.

Zumindest ein Verdrehsicherungsstift könnte mit dem Einsatz in Eingriff stehen. Durch Verdrehsicherungsstifte kann ein axialer Anschlag für den Einsatz geschaffen werden. Dabei kann der Flansch des Einsatzes an den Verdrehsicherungsstiften zur Anlage kommen. Die Verdrehsicherungsstifte erlauben aufgrund ihres Vermögens, sich selbst auszurichten, eine optimale flächige Krafteinleitung zur Aufnahme eines Drehmoments. Des Weiteren wird eine Ausrücksicherungsfunktion realisiert. Die Verdrehsicherungsstifte stellen sicher, dass die Gleitringe nicht von dem rotierenden Gegenring mitgenommen bzw. mitgedreht werden.

Eine erste zweier gegenüberliegender Dichtungsflächen könnte als Gleitwerkstoff Siliziumcarbid mit Graphitfüllung aufweisen und eine zweite Dichtungsfläche könnte als Gleitwerkstoff poröses Siliziumcarbid aufweisen. Als Gteitwerkstoffe an je zwei gegenüberliegenden Dichtungsflächen werden Siliziumcarbid mit Graphitfüllung und poröses Siliziumcarbid eingesetzt. Hierdurch wird insbesondere bei Verwendung eines Wasser Glykol-Gemisches als Kühlflüssigkeit eine sehr geringe Leistungsaufnahme bei maximaler Dichtheit unter Vermeidung von Produktablagerungen auf den Dichtungsflächen erreicht. Außerdem bietet diese Paarung der Gleitwerkstoffe den bestmöglichen Schutz der Dichtungsflächen vor Schädigungen bei einer mangelhaften Schmierung.

Der Einsatz könnte hülsenförmig mit einem runden Durchgang ausgebildet sein, dem die innere Arbeitsfläche zugewandt und die äußere Arbeitsfläche abgewandt ist. Hierdurch kann der Einsatz problemos zwischen einen ersten Gleitring und einen zweiten Gleitring verbracht werden.

Es gibt nun verschiedene Möglichkeiten, die Lehre der vorliegenden Erfindung in vorteilhafter Weise auszugestalten und weiter zu bilden. Dazu ist einerseits auf die nachgeordneten Ansprüche, andererseits auf die nachfolgende Erläuterung eines bevorzugten Ausführungsbeispiels der erfindungsgemäßen Gleitringdichtungsanordnung anhand der Zeichnung zu verweisen.

In Verbindung mit der Erläuterung des bevorzugten Ausführungsbeispiels anhand der Zeichnung, werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Schnittansicht einer Gleitringdichtungsanordnung mit zwei koaxial angeordneten Gleitringen und einem Gegenring, wobei zwischen den Gleitringen ein Einsatz koaxial angeordnet ist,
- Fig. 2: einen Ausschnitt der Gleitringdichtungsanordnüng gemäß Fig. 1 und
- Fig. 3: eine perspektivische Ansicht des Einsatzes.

### Ausführung der Erfindung

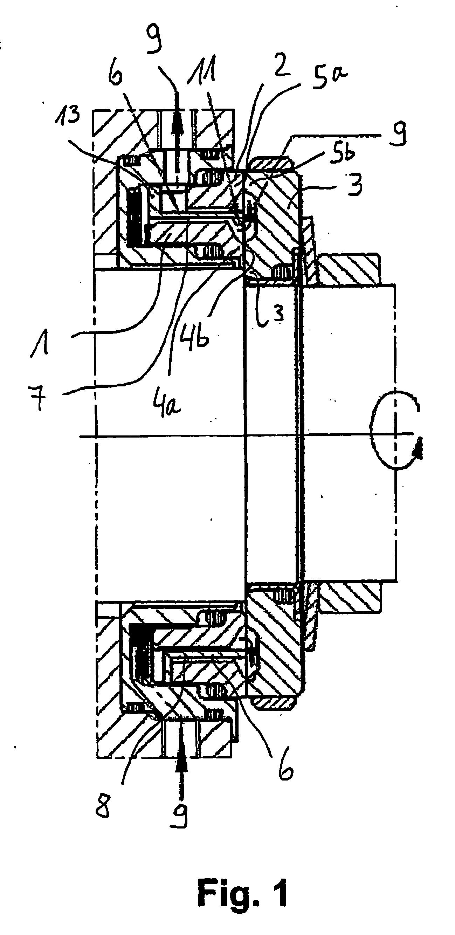

Fig. 1 zeigt eine Gieitringdichtungsanordnung, umfassend einen ersten Gleitring 1, einen koaxial zum ersten Gleitring 1 angeordneten zweiten Gleitring 2 und einen Gegenring 3, wobei die Gleitringe 1, 2 und der Gegenring 3 jeweils aneinander liegende Dichtungsflächen 4a, 4b, 5a, 5b aufweisen und wobei die Dichtungsflächen 4a, 5a der Gleitringe 1, 2 den ihnen jeweils zugeordneten Dichtungsflächen 4b, 5b des Gegenrings 3 gegenüberliegen. Konkret liegt eine Dichtungsfläche 4a des ersten Gleitrings 1 einer ersten Dichtungsfläche 4b des Gegenrings 3 gegenüber und liegt eine Dichtungsfläche 5a des zweiten Gleitrings 2 einer zweiten Dichtungsfläche 5b des Gegenrings 3 gegenüber.

Durch Zuströmung der Kühlflüssigkeit 9 in Pfeilrichtung an der inneren Arbeitsfläche 7 des Einsatzes 6 und Abströmung der Kühlflüssigkeit 9 an der äußeren Arbeitsfläche 8 des Einsatzes 6 wird eine umfängliche Zirkulierung der Kühlflüssigkeit 9 in Pfeilrichtung realisiert. Diese Zirkulierung wird durch eine Pumpwirkung unterstützt, die durch Zentrifugalkräfte des rotierenden Gegenrings 3 erzeugt wird. Die Hauptförderung erfolgt durch eine Wasserpumpe. Die Kühlflüssigkeit 9 wird nach Verlassen der Gleitringdichtungsanordnung in einem nicht gezeigten Kühlaggregat gekühlt.

Der Einsatz 6 ist aus einem Kunststoff gefertigt Der Einsatz 6 weist an seinem den Dichtungsflächen 4a, 4b, 5a, 5b zugewandten Ende 10 Rastnasen 11 auf, die von der inneren Arbeitsfläche 7 radial abragen. Der Einsatz 6 weist Rippen 12 auf, die von der äußeren Arbeitsfläche 8 radial abragen. Die Rippen 12 sind länglich ausgebildet und erstrecken sich in axialer Richtung.

Der Einsatz 6 weist einen von der äußeren Arbeitsfläche 8 radial abragenden Flansch 13 auf, welcher an seinem den Dichtungsflächen 4a, 4b, 5a, 5b abgewandten Ende 14 ausgebildet ist. Der Flansch 13 weist Durchbrüche 15 auf. Die Durchbrüche 15 können mit den Rippen 12 fluchten.

Eine erste Dichtungsfläche 4a zweier gegenüberliegender Dichtungsflächen 4a, 4b weist als Gleitwerkstoff Siliziumcarbid mit Graphitfüllung auf und eine zweite Dichtungsfläche 4b weist als Gleitwerkstoff poröses Siliziumcarbid auf.

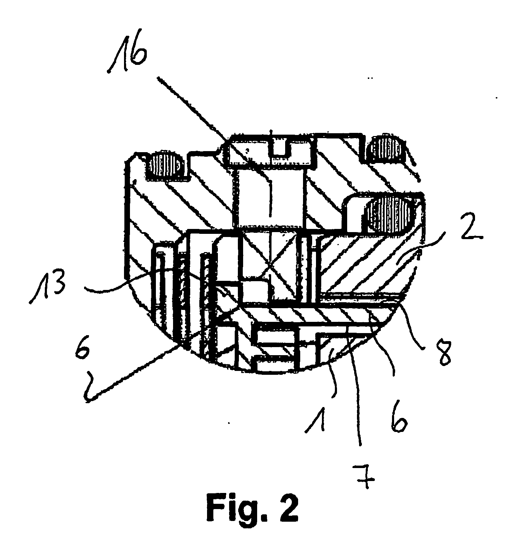

Fig. 2 zeigt einen Ausschnitt der Gleitringdichtungsanordnung gemäß Fig. 1, wobei zumindest ein Verdrehsicherungsstift 16 über den Einsatz 6 mit einem Gleitring 2 in Eingriff steht. Hierdurch kann eine Schwingungsentkopplung realisiert werden.

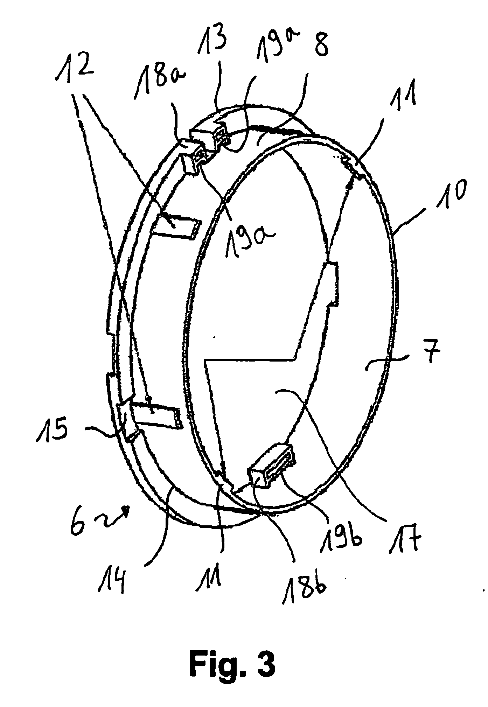

Fig. 3 zeigt, dass der Einsatz 6 hülsenförmig mit einem runden Durchgang 17 ausgebildet ist, dem die innere Arbeitsfläche 7 zugewandt und die äußere Arbeitsfläche 8 abgewandt ist.

Der Einsatz 6 weist komprimierbare Dämpferelemente 18a, 18b auf, wobei ein erstes Dämpferelement 18a in radialer Richtung nach außen abragt und ein zweites Dämpferelement 18b in radialer Richtung nach innen abragt. Hierdurch ist eine Drehmomentübertragung durch schwingungsdämpfende Ausformungen, nämlich durch die Dämpferelemente 18a, 18b, möglich. Die Dämpferelemente 18a, 18b sind derart mit Hohlräumen ausgestattet, dass sie problemlos geringfügig deformierbar sind. Die Hohlräume sind durch Stege 19a, 19b voneinander abgetrennt. Die Dämpferelemente 18a, 18b sind am den Dichtungsflächen 4a, 4b, 5a, 5b abgewandten Ende 14 ausgebildet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Gleitringdichtungsanordnung, umfassend einen ersten Gleitring (1), einen koaxial zum ersten Gleitring (1) angeordneten zweiten Gleitring (2) und einen Gegenring (3), wobei die Gleitringe (1, 2) und der Gegenring (3) jeweils aneinander liegende Dichtungsflächen (4a, 4b, 5a, 5b) aufweisen, wobei die Dichtungsflächen (4a, 5a) der Gleitringe (1, 2) den Dichtungsflächen (4b, 5b) des Gegenrings (3) gegenüberliegen, und wobei zwischen dem ersten Gleitring (1) und dem zweiten Gleitring (2) ein Einsatz (6) mit einer inneren Arbeitsfläche (7) und einer äußeren Arbeitsfläche (8) angeordnet ist, weicher Kühlflüssigkeit zu den Dichtungsflächen (4a, 4b, 5a, 5b) führt, **dadurch gekennzeichnet, dass** der Einsatz (6) komprimierbare Dämpferelemente (18a, 18b) aufweist, wobei ein erstes Dämpferelement (18a) in radialer Richtung nach außen abragt und ein zweites Dämpferelement (18b) in radialer Richtung nach innen abragt.

2. Gleitringdichtungsanordnung nach Anspruch 1, **dadurch gekennzeichnet, dass** der Einsatz (6) aus einem Kunststoff gefertigt ist.

3. Gleitringdichtungsanordnung nach Anspruch 1 oder 2, **dadurch gekennzeichnet, dass** der Einsatz (6) an seinem den Dichtungsflächen (4a, 4b, 5a, 5b) zugewandten Ende (10) Rastnasen (11) aufweist, die von der inneren Arbeitsfläche (7) radial abragen.

4. Gleitringdichtungsanordnung nach einem der Ansprüche 1 bis 3, **dadurch gekennzeichnet, dass** der der Einsatz (6) Rippen (12) aufweist, die von der äußeren Arbeitsfläche (8) radial abragen.

5. Gleitringdichtungsanordnung nach einem der Ansprüche 1 bis 4, **dadurch gekennzeichnet, dass** der Einsatz (6) einen von der äußeren Arbeitsfläche (8) radial abragenden Flansch (13) aufweist, welcher an seinem den Dichtungsflächen (4a, 4b, 5a, 5b) abgewandten Ende (14) ausgebildet ist.

6. Gleitringdichtungsanordnung nach Anspruch 5, **dadurch gekennzeichnet, dass** der Flansch (13) Durchbrüche (15) aufweist.

7. Gleitringdichtungsanordnung nach einem der Ansprüche 1 bis 6, **dadurch gekennzeichnet, dass** zumindest ein Verdrehsicherungsstift (16) mit dem Einsatz (6) in Eingriff steht.

8. Gleitringdichtungsanordnung nach einem der Ansprüche 1 bis 7, **dadurch gekennzeichnet, dass** eine erste Dichtungsfläche (4a) zweier gegenüberliegender Dichtungsflächen (4a, 4b) als Gleitwerkstoff Siliziumcarbid mit Graphitfüllung aufweist und dass eine zweite Dichtungsfläche (4b) als Gleitwerkstoff poröses Siliziumcarbid aufweist.

9. Gleitringdichtungsanordnung nach einem der Ansprüche 1 bis 8, **dadurch gekennzeichnet, dass** der Einsatz (6) hülsenförmig mit einem runden Durchgang (17) ausgebildet ist, dem die innere Arbeitsfläche (7) zugewandt und die äußere Arbeitsfläche (8) abgewandt ist.

## Claims

1. Mechanical seal arrangement, comprising a first slide ring (1), a second slide ring (2) arranged coaxially to the first slide ring (1), and a counter-ring (3), wherein the slide rings (1, 2) and the counter-ring (3) each have sealing surfaces (4a, 4b, 5a, 5b) lying against one another, wherein the sealing surfaces (4a, 5a) of the slide rings (1, 2) are opposite the sealing surfaces (4b, 5b) of the counter-ring (3), and wherein an insert (6) with an inner working surface (7) and an outer working surface (8) is arranged between the first slide ring (1) and the second slide ring (2), which insert guides coolant to the sealing surfaces (4a, 4b, 5a, 5b), **characterized in that** the insert (6) has compressible damper elements (18a, 18b), wherein a first damper element (18a) projects outwardly in the radial direction and a second damper element (18b) projects inwardly in the radial direction.

2. Mechanical seal arrangement according to Claim 1, **characterized in that** the insert (6) is manufactured from a plastic.

3. Mechanical seal arrangement according to Claim 1 or 2, **characterized in that**, at its end (10) facing the sealing surfaces (4a, 4b, 5a, 5b), the insert (6) has latching lugs (11) which project radially from the inner working surface (7).

4. Mechanical seal arrangement according to one of Claims 1 to 3, **characterized in that** the insert (6) has ribs (12) which project radially from the outer working surface (8).

5. Mechanical seal arrangement according to one of Claims 1 to 4, **characterized in that** the insert (6) has a flange (13) which projects radially from the outer working surface (8) and which is formed at its end (14) facing away from the sealing surfaces (4a, 4b, 5a, 5b).

6. Mechanical seal arrangement according to Claim 5, **characterized in that** the flange (13) has openings (15).

7. Mechanical seal arrangement according to one of Claims 1 to 6, **characterized in that** at least one anti-twist protection pin (16) is in engagement with the insert (6).

8. Mechanical seal arrangement according to one of Claims 1 to 7, **characterized in that** a first sealing surface (4a) of two opposite sealing surfaces (4a, 4b) has silicon carbide with a graphite filling as sliding material and **in that** a second sealing surface (4b) has porous silicon carbide as sliding material.

9. Mechanical seal arrangement according to one of Claims 1 to 8, **characterized in that** the insert (6) is of sleeve-shaped design with a round passage (17) which the inner working surface (7) faces and from which the outer working surface (8) faces away.

## Revendications

1. Agencement de joint d'étanchéité mécanique comprenant une première bague de glissement (1), une deuxième bague de glissement (2) disposée coaxialement à la première bague de glissement (1), et une bague conjuguée (3), les bagues de glissement (1, 2) et la bague conjuguée (3) présentant à chaque fois des surfaces d'étanchéité (4a, 4b, 5a, 5b) situées les unes contre les autres, les surfaces d'étanchéité (4a, 5a) des bagues de glissement (1, 2) étant en regard des surfaces d'étanchéité (4b, 5b) de la bague conjuguée (3), et entre la première bague de glissement (1) et la deuxième bague de glissement (2) étant disposé un insert (6) avec une surface de travail intérieure (7) et une surface de travail extérieure (8), qui conduit du liquide de refroidissement aux surfaces d'étanchéité (4a, 4b, 5a, 5b), **caractérisé en ce que** l'insert (6) présente des éléments d'amortissement comprimables (18a, 18b), un premier élément d'amortissement (18a) faisant saillie vers l'extérieur dans la direction radiale et un deuxième élément d'amortissement (18b) faisant saillie vers l'intérieur dans la direction radiale.

2. Agencement de joint d'étanchéité mécanique selon la revendication 1, **caractérisé en ce que** l'insert (6) est fabriqué en plastique.

3. Agencement de joint d'étanchéité mécanique selon la revendication 1 ou 2, **caractérisé en ce que** l'insert (6) présente, à son extrémité (10) tournée vers les surfaces d'étanchéité (4a, 4b, 5a, 5b) des nez d'encliquetage (11) qui font saillie radialement depuis la surface de travail intérieure (7).

4. Agencement de joint d'étanchéité mécanique selon l'une quelconque des revendications 1 à 3, **caractérisé en ce que** l'insert (6) présente des nervures (12) qui font saillie radialement depuis la surface de travail extérieure (8).

5. Agencement de joint d'étanchéité mécanique selon l'une quelconque des revendications 1 à 4, **caractérisé en ce que** l'insert (6) présente une bride (13) saillant radialement depuis la surface de travail extérieure (8), laquelle est réalisée à son extrémité (14) opposée aux surfaces d'étanchéité (4a, 4b, 5a, 5b).

6. Agencement de joint d'étanchéité mécanique selon la revendication 5, **caractérisé en ce que** la bride (13) présente des orifices (15).

7. Agencement de joint d'étanchéité mécanique selon l'une quelconque des revendications 1 à 6, **caractérisé en ce qu'**au moins une goupille de fixation en rotation (16) est en prise avec l'insert (6).

8. Agencement de joint d'étanchéité mécanique selon l'une quelconque des revendications 1 à 7, **caractérisé en ce qu'**une première surface d'étanchéité (4a) de deux surfaces d'étanchéité (4a, 4b) opposées présente, en tant que matériau de glissement, du carbure de silicium avec une charge de graphite, et **en ce qu'**une deuxième surface d'étanchéité (4b) présente, en tant que matériau de glissement, du carbure de silicium poreux.

9. Agencement de joint d'étanchéité mécanique selon l'une quelconque des revendications 1 à 8, **caractérisé en ce que** l'insert (6) est réalisé sous forme de douille avec un passage rond (17) vers lequel la surface de travail intérieure (7) est tournée et duquel la surface de travail extérieure (8) est détournée.
